# EUROPEAN PATENT SPECIFICATION

(11) **EP 4 403 419 B1**
(45) Date of publication and mention of the grant of the patent: **12.08.2026**
(21) Application number: 21951527.7
(22) Date of filing: 14.09.2021
(51) Int. Cl.: B60R 16/033, B60R 16/03, H02H 9/04, H02J 1/08

(54) **VEHICLE-MOUNTED POWER SUPPLY CIRCUIT, AND VEHICLE**
FAHRZEUGMONTIERTE STROMVERSORGUNGSSCHALTUNG UND FAHRZEUG
CIRCUIT D'ALIMENTATION ÉLECTRIQUE MONTÉ SUR VÉHICULE, ET VÉHICULE

(43) Date of publication of application: 24.07.2024
(73) Proprietor: Schaeffler Technologies AG & Co. KG, 91074 Herzogenaurach (DE)
(72) Inventor: YU, Sheng, Shanghai 201800 (CN)
(74) Representative: Schaeffler Technologies
(86) International application number: PCT/CN2021/118173
(87) International publication number: WO 2023/004952

(56) References cited:
- EP-A1- 3 691 068
- CN-A- 108 058 662
- CN-A- 109 649 309
- CN-U- 207 926 248
- CN-U- 207 926 248
- CN-U- 213 817 344
- DE-A1- 10 149 282
- JP-A- 2007 312 543

## Description

### Technical Field

The present invention relates to the technical field of automobile electronic control, and particularly relates to a vehicle-mounted power supply circuit and a vehicle.

### Prior Art

Logic circuits (e.g. electronic control units, information processing systems, and other electric equipment) of a vehicle and power motors are all connected to a vehicle-mounted power supply (e.g. a vehicle-mounted battery or a generator). Since the working environment of the vehicle is complex and can be affected by temperature, working conditions and other conditions, an output voltage of the vehicle-mounted power supply may fluctuate. These conditions include a load dump, which refers to sharp changes in the power supply voltage due to sudden changes in a load at the moment when the power supply is disconnected from the load, and the load dump may cause two types of problems: 1. failure to supply power to electronic equipment, and 2. a large voltage spike generated by inductive generators.

When a load dump occurs to the vehicle-mounted power supply, the vehicle-mounted power supply outputs a large voltage spike, thereby causing other electric equipment connected to the power supply to be damaged. For example, when an alternator (comprising inductive coils and rectifiers) charges a storage battery with a high current, a sharp rise in the output voltage of the alternator will be caused due to the inability of the current of the inductive devices to change abruptly if the storage battery is suddenly disconnected, and this voltage spike can reach 120 V and will last for 400 ms before subsiding.

DE 101 49 282 A1 discloses a method for generating a supply voltage intended for digital circuits in a motor vehicle. This method involves the use of a DC/DC converter to generate an intermediate voltage from a higher input voltage, specifically more than 12 volts, during normal operation. A linear regulator then generates the supply voltage from this intermediate voltage. In a parking mode, the DC/DC converter is bypassed using a bypass circuit, allowing the supply voltage to be directly generated by the linear regulator.

EP 3 691 068 A1 discloses a control system comprising a controller and a plurality of power regulating modules, including at least one first power regulating module and at least one second power regulating module. The first power regulating module is activated upon receiving an external wake-up signal and supplies power to the controller, which is connected to its output. The controller, once powered on, can send an internal wake-up signal to activate the second power regulating module, which is connected to a load module.

CN 207 926248 U discloses a vehicle-mounted power supply system that includes a power factor correction circuit connected to an AC power supply, an inverter circuit, and a transformer with multiple windings. The system incorporates a bidirectional AC/DC circuit linked to a high-voltage battery and a rectifier circuit with a buck circuit connected to a low-voltage storage battery. The invention allows for dual-mode operation, enabling both charging and discharging functions.

CN 109 649 309 A discloses a control system comprising a controller and multiple power regulation modules including at least one first and one second power regulation module. The first power regulation module is awakenable by an external wake-up signal and, once activated, powers on the controller. After being powered, the controller can issue internal wake-up signals to selectively activate the second power regulation modules, whose outputs are connected to respective load modules.

CN 108 058 662 A discloses a vehicle 24 V system load-dump transient over-voltage protection circuit comprising a control circuit and a voltage suppression circuit with a low-clamp-voltage TVS diode. The control circuit monitors the input voltage of the electronic device and keeps the suppression circuit inactive within the normal operating range so that negligible current is drawn. When a load-dump or other transient over-voltage occurs, the control circuit activates the suppression circuit, allowing the TVS diode to clamp the input voltage.

CN 213 817 344 U discloses a multipath power supply device that comprises a controller and at least two identically-structured power supply circuits, each circuit including an input voltage sampling circuit, a power supply branch with an electronic switch, and an electronic switch driving module. The controller monitors the input voltage of every power supply circuit and, upon detecting an abnormal voltage, commands the corresponding electronic switch driving module to disconnect the affected branch while maintaining operation of the remaining branches with normal voltage.

CN 207 926 248 U discloses a vehicle-mounted power supply that combines a power factor correction stage, an inverter, a multi-winding transformer, and downstream bidirectional AC/DC, rectifier and buck converter stages, all governed by a common control circuit. The system enables AC grid charging of both a high-voltage traction battery via the transformer's secondary winding and a low-voltage auxiliary battery via the tertiary winding, while also permitting energy transfer from the high-voltage battery to the low-voltage battery in discharge mode. By multiplexing the transformer windings and sharing power-conversion stages, the design lowers component count, volume and cost relative to separate charger and DC-DC units.

### Summary of the Invention

The present invention provides a vehicle-mounted power supply circuit as recited in independent claim 1 and vehicle (claim 16), to ensure that electronic equipment of the vehicle will not be damaged after a transient overvoltage of a load dump and to meet anti-reverse requirements. Preferred embodiments are recited in dependent claims.

### Brief Description of the Drawings

In order to more clearly illustrate the technical solutions in the present invention or the prior art, the drawings, which are required to be used in the embodiments or the prior art, are briefly described below.
FIG. 1 is a schematic diagram of a vehicle-mounted power supply circuit of the prior art;
FIG. 2 is a schematic diagram of a vehicle-mounted power supply circuit provided in an embodiment of the present invention.

### Detailed Description of Embodiments

In order to make the objectives, technical solutions, and advantages of the present invention clearer, the technical solutions of the present invention will be clearly and completely described below with reference to the drawings in the present invention. Obviously, the embodiments described are some of the embodiments of the present invention, but not all of the embodiments.

The terms "first", "second" and the like in the specification, claims, and above drawings of the present invention are used to distinguish similar objects and need not to be used to describe a specific sequence or precedence order. It should be understood that the data used in this way may be interchanged under appropriate circumstances so that the embodiments described herein can be implemented in a sequence other than that illustrated or described herein.

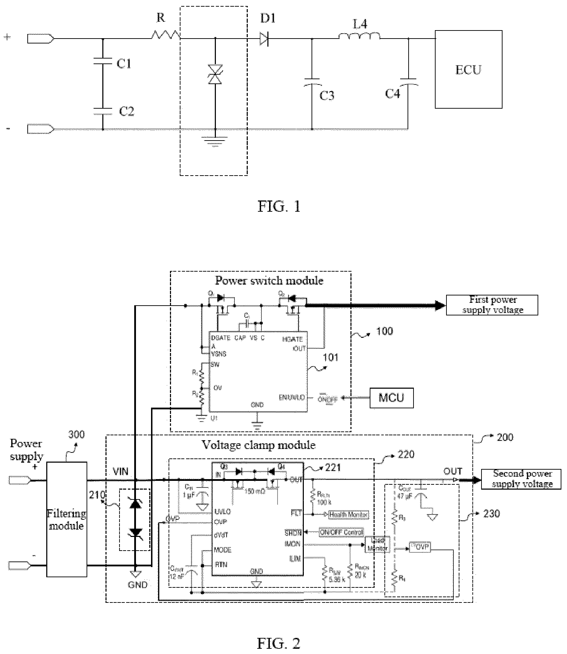

FIG. 1 is a schematic diagram of a vehicle-mounted power supply circuit of the prior art. Most current power supply circuits use a transient voltage suppressor (TVS) to suppress transient voltages under load-dump working conditions, etc. As shown in FIG. 1, the vehicle-mounted power supply circuit comprises a capacitor C1, a capacitor C2, a resistor R, a transient voltage suppressor (TVS), an anti-reverse diode D1, an inductor L4, a capacitor C3, a capacitor C4 and an electronic control unit (ECU), wherein the capacitor C1 and the capacitor C2 are connected in series and electrically connected between a positive electrode and a negative electrode of a power supply; the resistor R is electrically connected to an anode of the anti-reverse diode D1; a terminal on one side of the transient voltage suppressor (TVS) is connected to an intermediate node of the resistor R and the anti-reverse diode D1, and a terminal on the other side of the transient voltage suppressor (TVS) is electrically connected to a grounding terminal GND; a terminal on one side of the inductor L4 is electrically connected to a cathode of the anti-reverse diode D1, and a terminal on the other side of the inductor L4 is electrically connected to the electronic control unit (ECU); a terminal on one side of the capacitor C3 is connected to an intermediate node of the anti-reverse diode D1 and the inductor L4, and a terminal on the other side of the capacitor C3 is electrically connected to the grounding terminal GND; and a terminal on one side of the capacitor C4 is connected to an intermediate node of the inductor L4 and the electronic control unit, and a terminal on the other side of the capacitor C4 is electrically connected to the grounding terminal GND.

In the vehicle-mounted power supply circuit in FIG. 1, the capacitor C1, the capacitor C2, the resistor R, the transient voltage suppressor (TVS) and the anti-reverse diode D1 form an anti-surge circuit. At the moment of startup, the anti-reverse diode D1 is not conducting due to the presence of C3 and C4, and the current forms a loop with the transient voltage suppressor (TVS) through the resistor R. Although a control method of the above technical solution is simple, it is only applicable to low-current situations because the anti-reverse diode D1 is in the vehicle-mounted power supply circuit, the anti-reverse diode D1 is a low-power device that cannot be applied to h-current circuits, or it will be easily broken down; and moreover, the anti-reverse diode D1 is not capable of being separated when a high voltage is input at the input end (Vin).

FIG. 2 is a schematic diagram of a vehicle-mounted power supply circuit provided in an embodiment of the present invention. As shown in FIG. 2, the vehicle-mounted power supply circuit according to an embodiment of the present invention comprises a power switch module 100 and a voltage clamp module 200, and the power switch module 100 and the voltage clamp module 200 are both electrically connected to a power supply to receive an input voltage from the power supply; on the basis of the received input voltage, the power switch module 100 outputs a first power supply voltage to the first power supply link; and the voltage clamp module 200 clamps the received input voltage within a preset voltage range and outputs a second power supply voltage to the second power supply link, wherein the power switch module 100 is electrically connected to a microcontroller unit (MCU) to receive a switch control signal from the microcontroller unit (MCU) and controls the turn-on and turn-off of the first power supply voltage based on the switch control signal.

As can be seen from the above, in the vehicle-mounted power supply circuit provided by the embodiment of the present invention, the first power supply voltage is output to the first power supply link, and the second power supply voltage is output to the second power supply link, that is, the first power supply link and the second power supply link are independent of each other; and the power switch module is electrically connected to the microcontroller unit, and the microcontroller unit, by means of the switch control signal, may directly trigger the power switch module to turn on or turn off the first power supply voltage. Therefore, since the present invention adopts a way that the first power supply voltage and the second power supply voltage are separately controlled and the turn-on or turn-off of the first power supply voltage is independently controlled, the damage to a backward stage circuit caused by a transient high current generated when the load dump occurs is avoided, and a good power supply environment is provided for the electronic equipment of the vehicle-mounted system.

For example, the first power supply link is a link for supplying power to the vehicle-mounted power motor, and the second power supply link is a link for supplying power to the vehicle-mounted logic circuit. The first power supply voltage output by the first power supply link is used as a working voltage of high-power power equipment, e.g., a power motor or the like, and the second power supply voltage output by the second power supply link is used as a working voltage of the vehicle-mounted logic circuit, e.g., a logic control circuit, vehicle-mounted electronic equipment, an information processing system, etc.

Further, the vehicle-mounted power supply circuit further comprises a filtering module 300, and the filtering module 300 receives an original voltage from the power supply and filters the original voltage to output the input voltage, wherein the filtering module 300 comprises a first output end and a second output end, the first output end outputs the input voltage, and the second output end is grounded. The filtering module 300 mainly suppresses the electromagnetic noise and clutter signals of the input power supply to prevent interference with the power supply, and also that with the backward stage circuit by the power supply generated high-frequency clutters. The filtering module 300 may be implemented using conventional filtering circuits, such as various complex filtering circuits formed by connecting capacitors in parallel at both ends of the load resistor, or connecting inductors in series with the load, as well as combining capacitors and inductors, which will not be limited herein by the present invention.

Further, the power switch module 100 comprises a first control unit 101, a first power switch tube Q₁, and a second power switch tube Q₂; the first control unit 101 comprises an output pin (OUT) and two control voltage signal pins (DGATE and HGATE); a source electrode of the first power switch tube Q₁ is electrically connected to the first output end of the filtering module 300; a drain electrode of the first power switch tube Q₁ is electrically connected to a drain electrode of the second power switch tube Q₂; a source electrode of the second power switch tube Q₂ is electrically connected to the output pin of the first control unit 101 in order to output the first power supply voltage; a gate electrode of the first power switch tube Q₁ and a gate electrode of the second power switch tube Q₂ are connected to the two corresponding control voltage signal pins of the first control unit 100, respectively so as to receive a control signal from the first control unit 100; and the first control unit 101 further comprises an enable signal pin (EN), and the enable signal pin (EN) is electrically connected to the microcontroller unit (MCU) to receive the switch control signal from the microcontroller unit (MCU), wherein the switch control signal controls the turn-on or turn-off of the first power supply voltage.

Specifically, the first power switch tube Q₁ and the second power switch tube Q₂ are electrically connected in a mirror-symmetrical manner, and the first power switch tube Q₁ and the second power switch tube Q₂ constitute a mirror current source; since the drain and gate electrodes of the first power switch tube Q₁ are connected, as long as the input voltage **VIN** is greater than Vthl (the threshold voltage of Q₁), the first power switch tube Q₁ operates in a saturation region; if the characteristics of the first and second power switch tubes Q₁, Q₂ are the same, the output voltage V₀ can be large enough so that the second power switch tube Q₂ is also in the saturation region; by means of the first power switch tube Q₁ and the second power switch tube Q₂ constituting the mirror current source, the width-to-length ratio of the MOSEFET switch device in the power switch module is respectively increased, which helps increase the saturation current and the current carrying capacity of the MOSEFET switch device; in addition, a voltage clamp effect is achieved, preventing the power switch module 100 from being damaged by instantaneous high current.

Further, the first power switch tube Q₁ is an ideal diode, and the second power switch tube Q₂ is a MOSEFET switch device integrating a diode. It should be noted that a source electrode-drain electrode current (I_{DS}) and a source electrode-drain electrode voltage (V_{DS}) of the first power switch tube Q₁ need to be kept within safe operating area (SOA) boundaries when the first power switch tube Q₁ accumulates energy from the applied voltage and current. A sudden load drop can occur when a load on the first link to which the power supply is supplying power is suddenly disconnected, at which point the other loads will experience a surge of the power supply voltage (e.g. greater than 60 V) or a fairly high transient current (e.g. greater than 80 A). For example, in one implementation of the present application, the first power switch tube Q₁ is designed to be an ideal diode, which has a higher operating efficiency than an ordinary diode. This is because, for the ordinary diode, there is a voltage drop of about 0.7 V for a silicon tube and a voltage drop of about 0.2 V for a germanium tube when it is in forward conduction, whereas for the ideal diode, this voltage drop for the tube is almost absent, so that it can be used for inverse test circuits; and the ideal diode is more sensitive than the ordinary diode when the load drops suddenly, and is capable of clamping a large voltage input by the power supply into its safe operation area boundaries to protect the backward stage circuit. Therefore, through the combined action of the above first power switch tube Q₁ and the above second power switch tube Q₂, the received input voltage can be clamped in a preset voltage range and the reverse connection of the direct current voltage can be prevented, so that the load dump and anti-reverse requirements of the vehicle-mounted power supply circuit can be met.

**In** addition, in this embodiment, the turn-on and turn-off of the first power supply voltage can be controlled individually by the microcontroller unit (MCU). When the input voltage is greater than the first threshold, the power switch module 100 is controlled to turn off the first power supply voltage if the first control unit 101 receives the switch control signal from the microcontroller unit (MCU) indicating turn-off of the first power supply voltage. At this time, the power switch module 100 can be controlled to turn off the first power supply voltage directly by means of internal software operation of the microcontroller unit (MCU) so as to avoid the impact of a transient large voltage. Among these, the microcontroller unit (MCU) may be powered by the second power supply voltage as a logic power supply; the microcontroller unit (MCU) sends a switch control signal to the first control unit 101, a high value of the enable signal (EN) triggers the power switch module 100 to turn on, in order to supply power to the first power supply link, and a low value of the enable signal (EN) triggers the power switch module 100 to turn off, in order to cut off power supplied to the first power supply link. **In** addition, if the microcontroller unit (MCU) detects a vehicle fault (e.g. a power failure, a system fault) or an input voltage being an overvoltage, the first control unit 101 will be triggered to turn off the first power supply voltage.

Further, the power switch module 100 further comprises a first resistor R₁ and a second resistor R₂; the first control unit 101 further comprises a first functional pin (A), a second functional pin (VSNS), a third functional pin (SW), and an overvoltage detection pin (OV); the first functional pin (A) and the second functional pin (VSNS) are both electrically connected to the source electrode of the first power switch tube Q₁; and the first resistor R₁ and the second resistor R₂ are connected in series and then electrically connected between the third functional pin (SW) and ground, the third functional pin (SW) and the second functional pin (VSNS) are electrically connected inside the first control unit 101, and the overvoltage detection pin (OV) is electrically connected to an intermediate node formed after the first resistor R₁ and the second resistor R₂ are connected in series, for detecting whether the input voltage is greater than a second threshold, wherein when the input voltage is greater than the second threshold, the first control unit 101 automatically controls the power switch module 100 to turn off the first power supply voltage if the first control unit 101 does not receive a switch control signal from the microcontroller unit (MCU) indicating turn-off of the first power supply voltage, wherein the second threshold is greater than the first threshold.

Specifically, the second functional pin (VSNS) of the first control unit 101 is electrically connected to the first output end of the filtering module 300. The first resistor R₁ and the second resistor R₂ are used as divider resistors, wherein the first resistor R₁ is connected to the third functional pin (SW) of the first control unit 101, and the second resistor R₂ is grounded, thereby dividing an input bus power supply voltage (i.e. the filtered direct current voltage) through the first resistor R₁ and the second resistor R₂ to obtain a sampling voltage, and monitoring the sampling voltage using the overvoltage detection pin (OV) of the first control unit 101. Once the input power supply voltage is monitored to be too high, the first control unit 101 is controlled to be turned off to protect the backward stage circuit from being damaged by the high current. In FIG. 2, the first control unit 101 is an integrated circuit (IC) chip comprising one or more circuits, and alternatively, the first control unit 101 may be implemented using hardware logic, machine-readable instructions, hardware-implemented state machines and/or any combination thereof.

When the input voltage is greater than a first threshold, if the microcontroller unit (MCU) does not send a switch control signal all the time, that is, the microcontroller unit (MCU) fails to control the power switch module 100 to turn off the first power supply voltage all the time when the input voltage is greater than the first threshold, the input voltage will continue to rise, and the overvoltage detection pin (OV) of the first control unit 101 will detect that the input voltage has become greater than the second threshold, and then will perform a corresponding turn-off operation when the input voltage is greater than a second threshold (wherein the second threshold is greater than the first threshold). Specifically, the second threshold value of the input voltage can be set according to the safe operation area (SOA) boundary value of the first power switch tube Q₁ and the second power switch tube Q₂. The power switch module 100 is controlled to turn off the first power supply voltage through the overvoltage detection circuit (hardware circuit) carried by the first control unit 101 itself. It should be understood that the first control unit 101 itself can monitor the overvoltage by means of the overvoltage detection circuit (hardware circuit), and can compensate for the implementation of load dump transient overvoltage protection in the event of the microcontroller unit (MCU) detecting a failure, so as to further improve the safety of the vehicle power supply system.

Further, the power switch module 100 further comprises a first capacitor C₁, and the first capacitor C₁ comprises a first end and a second end; the first control unit 101 further comprises a fourth functional pin (C), a fifth functional pin (VS) and a sixth functional pin (CAP); and the first end of the first capacitor C₁ is electrically connected to an intermediate node of the first power switch tube Q₁ and the second power switch tube Q₂, the fourth functional pin (C) and the fifth functional pin (VS), and the second end of the first capacitor C₁ is electrically connected to the sixth functional pin (CAP) of the first control unit 101, so as to be used for forming a charge pump circuit to respectively increase a voltage of the control end of the first power switch tube Q₁ and a voltage of the control end of the second power switch tube Q₂.

For example, a gate electrode of the first power switch tube Q₁ is electrically connected to one control voltage signal pin (DGATE) on the first control unit 101, and a gate electrode of the second power switch tube Q₂ is electrically connected to the other control voltage signal pin (HGATE) on the first control unit 101.

In the embodiment of the present invention, when the first control unit 101 is powered on, the first capacitor C₁ begins to be charged, that is, the first power switch tube Q₁, the fourth functional pin (C) and the fifth functional pin (VS) charge the first end of the first capacitor C₁. The sixth functional pin (CAP) is a capture pin, the sixth functional pin (CAP) is electrically connected to the second end of the first capacitor C₁, and the sixth functional pin (CAP) outputs a high level to control the charging of the first capacitor C₁, thereby enabling the voltage positive end V_{CAP} of the energy-storing first capacitor C₁ to slowly rise to be close to a turn-on voltage of the first power switch tube Q₁ and the second power switch tube Q₂. Even when the vehicle-mounted power supply is powered off, V_{CAP} can serve as VIN to continue supplying power to the powered system (the first power supply link), which can also continue maintaining the operation of the first power supply link.

Based on the two-stage effect of the flat capacitor, the voltages of the control voltage signal pin DGATE and the control voltage signal pin HGATE of the first control unit 101 continuously rise after the first capacitor C₁ begins to be charged. For example, the first power switch tube Q₁ and the second power switch tube Q₂ are both N-type channel MOSFETs. When a high level is input into the gate electrodes of the first power switch tube Q₁ and the second power switch tube Q₂, due to the presence of the first capacitor C₁, the voltages of the DGATE and the HGATE rise, so that the first power switch tube Q₁ and the second power switch tube Q₂ can be turned on. The filtered power supply voltage is input to the source electrode of the first power switch tube Q₁, and the first capacitor C₁ is connected to the intermediate nodes of the first power switch tube Q₁ and the second power switch tube Q₂, so that the first end of the first capacitor C₁ continues to be charged. The second end of the first capacitor C₁ is electrically connected to the sixth functional pin (CAP) of the first control unit 101, and the voltage positive end V_{CAP} of the energy storage first capacitor C₁ slowly rises to be close to a turn-on voltage of the first power switch tube Q₁ and the second power switch tube Q₂, so as to achieve the turn-on (conduction) of the first power switch tube Q₁ and the second power switch tube Q₂. Alternatively, a MOSFET with one or more P-type channels may also be used to replace the first power switch tube Q₁ and the second power switch tube Q₂, which is not limited in the present invention.

Further, in an embodiment of the present invention, the voltage clamp module 200 comprises a transient voltage suppressor (TVS) 210, a voltage clamp control sub-circuit 220, and a feedback unit 230. The TVS 210 is electrically connected between the first output end of the filtering module 300 and ground (GND); the voltage clamp control sub-circuit 220 is electrically connected to the first output end of the filtering module 300 and the feedback unit 230, respectively, for detecting a magnitude of the input voltage and clamping the received input voltage within a preset voltage range so as to output the second power supply voltage to the second power supply link; and the feedback unit 230 is used for feeding back the magnitude of the second power supply voltage to the voltage clamp control sub-circuit 220.

Specifically, the TVS 210 is connected in parallel with the voltage clamp control sub-circuit 220. The TVS 210 is composed of one or more TVS tubes, one pole of the TVS tube is electrically connected to the first output end of the filtering module, and the other pole of the TVS tube is grounded. The working principle of the TVS 210 is: the TVS 210 is connected in parallel into the voltage clamp control sub-circuit 220; when the circuit operates normally, it is in the cutoff state (high-resistance state), which does not affect the normal operation of the line; and when the circuit has a load-dump abnormal overvoltage and reaches its breakdown voltage, that is, when the two poles of the TVS tube are subjected to an instantaneous high-energy shock, it can abruptly reduce the high impedance between the two poles to low impedance at a very high speed (up to 1/(10^12) seconds), and absorb up to several kilowatts of surge power (high current) to clamp the voltage between the two poles at a predetermined value, thereby ensuring that the circuit components and parts behind it are prevented from being damaged by the transient high-energy impact. When the load dump abnormal overvoltage disappears, it returns to the high resistance state and the circuit operates normally. When the voltage exceeds the turn-on voltage of the TVS 210, it is turned on and grounded to release the voltage. Since the normal signal voltage generally does not reach the turn-on voltage of the TVS 210, it will not be turned on and grounded so as to avoid loss. In the case of a sudden drop in load, the output voltage, which generally exceeds the turn-on voltage of the TVS 210, causes the TVS 210 to turn on, and the surge voltage (high current) is released through grounding, thereby protecting the backward stage circuit and not damaging the electronic equipment connected to the second link. Optionally, the TVS 210 is a bi-directional TVS tube so as to prevent a high alternating current from damaging the components and parts of the backward stage circuit.

Further, the voltage clamp control sub-circuit 220 comprises a second control unit 221; the second control unit 221 comprises a switch assembly, and the switch assembly comprises a third power switch tube Q₃ and a fourth power switch tube Q₄; and the third power switch tube Q₃ is electrically connected to the fourth power switch tube Q₃ for clamping the received input voltage within a preset voltage range and for preventing reverse connection of the direct current voltage, wherein a source electrode of the third power switch tube Q₃ is electrically connected to the first output end of the filtering unit 300, a drain electrode of the third power switch tube Q₃ is electrically connected to a drain electrode of the fourth power switch tube Q₄, and a source electrode of the fourth power switch tube Q₄ is electrically connected to an output pin (OUT) of the second control unit 221 so as to output the second power supply voltage to the second power supply link.

Similarly, the third power switch tube Q₃ and the fourth power switch tube Q₄ are electrically connected in a mirror-symmetrical manner to constitute a mirror current source; by means of the third power switch tube Q₁ and the fourth power switch tube Q₂ constituting the mirror current source, the width-to-length ratio of the **MOSEFET** switch device in the second control unit 221 is respectively increased, which helps increase the saturation current and the current carrying capacity of the **MOSEFET** switch device; in addition, a voltage clamp effect is achieved, preventing the second control unit 221 from being damaged by instantaneous high current. Therefore, through the joint action of the third power switch tube Q₃ and the fourth power switch tube Q₄, the received input voltage can be clamped within a preset voltage range and the reverse connection of the direct current voltage can be prevented.

Further, the second control unit 221 further comprises an undervoltage lockout pin (UVLO), and the undervoltage lockout pin (UVLO) is electrically connected to the first output end of the filtering module 300, for detecting whether the input voltage is lower than a threshold voltage for turning on the second control unit 221; and if the input voltage is lower than the threshold voltage for turning on the second control unit 221, the second control unit 221 is automatically turned off.

Further, the second control unit 221 further comprises: a slope setting pin (dvdT) used for setting a slope of an output internal voltage; a mode selection pin (MODE) used for selecting an overload error response mode; and an RTN functional pin used as a reference voltage of the internal control circuit, wherein the mode selection pin (MODE) is electrically connected to the RTN functional pin. For example, when reverse input polarity protection is not required, the RTN functional pin can be used for ground, and the mode selection pin (MODE) and the RTN functional pin are electrically connected to the same node via an external lead.

Further, the voltage clamp control sub-circuit 220 further comprises a second capacitor (C_{dvdT}). One end of the second capacitor (C_{dvdT}) is electrically connected to the slope setting pin (dvdT), and the other end of the second capacitor (C_{dvdT}) is electrically connected to the mode selection pin (MODE) and the RTN functional pin.

Further, the second control unit 221 further comprises a fault condition detection pin (FLT), for external equipment to detect whether the second control unit has a fault; and the fault condition detection pin (FLT) is connected to the output pin of the second control unit through a resistor R_{FLTb}.

Further, the second control unit 221 further comprises a turn-off pin (SHDN), and the turn-off pin (SHDN) can be pulled down through the trigger of the low current, so that the equipment enters a low-power-consumption shutdown mode.

Further, the second control unit 221 further comprises a current monitoring output pin (IMON) that is electrically connected to the RTN functional pin via a resistor R_{IMON} and further connected to an external load monitor. For example, the resistor R_{IMON} is 5.36 KΩ. It should be noted that the resistor R_{IMON} for connection is disposed between the current monitoring output pin (IMON) and the RTN functional pin, which can convert the current into a proportional voltage for monitoring. In addition, the current monitoring output pin (IMON) can be left floating if it is not used.

Further, the second control unit 221 further comprises a limit current setting pin (ILIM), and the limit current setting pin (ILIM) is electrically connected to the RTN functional pin via a resistor R_{ILIM}. For example, the resistor R_{ILIM} is 20 kΩ. It should be noted that the resistor R_{ILIM} for connection is disposed between the limit current setting pin (ILIM) and the RTN functional pin, which can be used for overload and short-circuit current limiting.

Further, the feedback unit 230 comprises a third resistor R₃, a fourth resistor R₄, and an overvoltage protection device. The third resistor R₃ and the fourth resistor R₄ are connected in series and then electrically connected between the output pin of the second control unit 221 and the RTN functional pin; and one end of the overvoltage protection device is electrically connected to the intermediate node formed after the third resistor R₃ and the fourth resistor R₄ are connected in series, and the other end of the overvoltage protection device is electrically connected to the overvoltage protection signal (OVP) pin of the second control unit 221, for performing voltage reduction protection on the second control unit 221 when the direct current voltage is too high.

Further, the voltage clamp control sub-circuit 220 further comprises a third capacitor. One end of the third capacitor (C_{IN}) is electrically connected to the first output end of the filtering module 300 and the switch assembly, and the other end of the third capacitor (C_{IN}) is grounded. The third capacitor (C_{IN}) is used for the input direct current voltage after filtering.

Further, the feedback unit 230 further comprises a fourth capacitor (C_{OUT}). One end of the fourth capacitor (C_{OUT}) is electrically connected to the output pin of the voltage clamp control sub-circuit, and the other end of the fourth capacitor is grounded. The fourth capacitor (C_{OUT}) is used for filtering the output direct current voltage.

As can be seen from the above, in the vehicle-mounted power supply circuit provided by the embodiment of the present invention, the first power supply voltage is output to the first power supply link, and the second power supply voltage is output to the second power supply link, that is, the first power supply link and the second power supply link are independent of each other; and the power switch module is electrically connected to the microcontroller unit, wherein the microcontroller unit, by means of the switch control signal, may directly trigger the power switch module to turn on or turn off the first power supply voltage. As described above, as the mode of separating the first and second power supply voltages is adopted and the turn-on or turn-off of the first power supply voltage is independently controlled, damage to the backward stage circuit by a transient high current generated when load dump occurs is avoided. Therefore, the load dump and anti-reverse requirements of the vehicle-mounted power supply circuit are met, and a good power supply environment is provided for the electronic equipment of the vehicle-mounted system.

The embodiment of the present invention also provides a vehicle, and the vehicle comprises any one of the above vehicle-mounted power supply circuits described herein.

The device embodiments described above herein are only illustrative, wherein the units described as separate components may or may not be physically separated, and the components shown as units may or may not be physical units, that is, they may be located in one location, or they can be distributed across multiple network units. Some or all of the modules can be selected according to the actual needs for achieving the purpose of the solution of this embodiment.

With the description of the above implementations, it is clear to those skilled in the art that the implementations can be realized with the assistance of software plus the requisite common hardware platform, or of course by hardware. Based on this understanding, the portion of the above technical solutions that is essential or contributes to the prior art may be embodied in the form of a software product that may be stored in a computer-readable storage medium, such as a ROM/RAM, a disk, a CD-ROM, or the like, and that comprises a number of instructions to enable a piece of computer equipment (which may be a personal computer, a server, network equipment, or the like) to carry out the method described in the various embodiments or in some portions of the embodiments.

## Claims

1. A vehicle-mounted power supply circuit, wherein the vehicle-mounted power supply circuit comprises a power switch module (100) and a voltage clamp module (200),the power switch module (100) and the voltage clamp module (200) both being electrically connected to a power supply to receive an input voltage from the power supply; on the basis of the received input voltage, the power switch module (100) is configured to output a first power supply voltage to a first power supply link; and the voltage clamp module (200) is configured to clamp the received input voltage within a preset voltage range and to output a second power supply voltage to a second power supply link, wherein the power switch module (100) is electrically connected to a microcontroller unit (MCU) to receive a switch control signal from the microcontroller unit (MCU) and configured to control the turn-on or turn-off of the first power supply voltage based on the switch control signal, **characterized in that** the power switch module (100) comprises a first control unit (101), a first power switch tube (Q1), and a second power switch tube (Q2);the first control unit (101) comprises an output pin (OUT) and two control voltage signal pins (DGATE, HGATE);a source electrode of the first power switch tube (Q1) is electrically connected to the first output end of the filtering module (300);a drain electrode of the first power switch tube (Q1) is electrically connected to a drain electrode of the second power switch tube (Q2);a source electrode of the second power switch tube (Q2) is electrically connected to the output pin (OUT) of the first control unit (101) in order to output the first power supply voltage; a gate electrode of the first power switch tube (Q1) and a gate electrode of the second power switch tube (Q2) are electrically connected to two corresponding control voltage signal pins (DGATE, HGATE) of the first control unit (101), respectively, so as to receive a control signal from the first control unit (101);and the first control unit (101) further comprises an enable signal pin (EN), and the enable signal pin (EN) is electrically connected to the microcontroller unit (MCU) to receive the switch control signal from the microcontroller unit (MCU),wherein the switch control signal is configured to control the turn-on or turn-off of the first power supply voltage, wherein the first power switch tube (Q1) is an ideal diode, and the second power switch tube (Q2) is a MOSFET device integrating a diode, wherein when the input voltage is greater than a first threshold, the power switch module (100) is configured to be controlled to turn off the first power supply voltage if the first control unit (101) receives a switch control signal from the microcontroller unit (MCU) indicating turn-off of the first power supply voltage, wherein the power switch module (100) further comprises a first capacitor (C1), and the first capacitor (C1) comprises a first end and a second end; the first control unit (101) further comprises a fourth functional pin (C), a fifth functional pin (VS) and a sixth functional pin (CAP);and the first end of the first capacitor (C1) is electrically connected to an intermediate node of the first power switch tube (Q1) and the second power switch tube (Q2), the fourth functional pin (C) and the fifth functional pin (VS);and the second end of the first capacitor (C1) is electrically connected to the sixth functional pin (CAP) of the first control unit (101), for forming a charge pump circuit to respectively increase a voltage of the control end of the first power switch tube (Q1) and a voltage of the control end of the second power switch tube (Q2),wherein the voltage clamp module (200) comprises a TVS (210), a voltage clamp control sub-circuit (220) and a feedback unit (230);the TVS (210) is electrically connected between the first output end of the filtering module (300) and ground; the voltage clamp control sub-circuit (220) is electrically connected to the first output end of the filtering module (300) and the feedback unit (230), respectively, for detecting a magnitude of the input voltage and clamping the received input voltage within a preset voltage range so as to output the second power supply voltage to the second power supply link;and the feedback unit (230) is used for feeding back the magnitude of the second power supply voltage to the voltage clamp control sub-circuit (220).

2. The vehicle-mounted power supply circuit according to Claim 1,**characterized in that** the first power supply link is a link for supplying power to a vehicle-mounted power motor, and the second power supply link is a link for supplying power to a vehicle-mounted logic circuit.

3. The vehicle-mounted power supply circuit according to Claim 2,**characterized in that** the vehicle-mounted power supply circuit further comprises a filtering module (300), and the filtering module (300) is configured to receive an original voltage from the power supply and to filter the original voltage to output the input voltage, wherein the filtering module (300) comprises a first output end and a second output end, the first output end is configured to output the input voltage, and the second output end is grounded.

4. The vehicle-mounted power supply circuitaccording to Claim 1,**characterized in that** the power switch module (100) further comprises a first resistor (R1) and a second resistor (R2), and the first control unit (101) further comprises a first functional pin (A), a second functional pin (VSNS), a third functional pin (SW) and an overvoltage detection pin (OV),and the first and second functional pins (A, VSNS) are both electrically connected to the source electrode of the first power switch tube (Q1);the first resistor (R1) and the second resistor (R2) are connected in series and then electrically connected between the third functional pin (SW) and ground, the third functional pin (SW) is internally electrically connected to the second functional pin (VSNS),and the overvoltage detection pin (OV) is electrically connected to an intermediate node formed after the first resistor (R1) and the second resistor (R2) are connected in series, for detecting whether the input voltage is greater than a second threshold; wherein when the input voltage is greater than the second threshold, the first control unit (101) is configured to control the power switch module (100) to turn off the first power supply voltage if the first control unit (101) does not receive a switch control signal from the microcontroller unit (MCU) indicating turn-off of the first power supply voltage, wherein the second threshold is greater than the first threshold.

5. The vehicle-mounted power supply circuit according to Claim 1,**characterized in that** the voltage clamp control sub-circuit (220) comprises a second control unit (221),the second control unit (221) comprises a switch assembly; the switch assembly comprises a third power switch tube (Q3) and a fourth power switch tube (Q4), and the third power switch tube (Q3) is electrically connected to the fourth power switch tube (Q4), for clamping the received input voltage within the preset voltage range and used for preventing reverse connection of the direct current voltage, wherein a source electrode of the third power switch tube (Q3) is electrically connected to the first output end of the filter unit (300);a drain electrode of the third power switch tube (Q3) is electrically connected to a drain electrode of the fourth power switch tube (Q4);and a source electrode of the fourth power switch tube (Q4) is electrically connected to an output pin (OUT) of the second control unit (221), so as to output the second power supply voltage to the second power supply link.

6. The vehicle-mounted power supply circuit according to Claim 5,**characterized in that** the second control unit (221) further comprises an undervoltage lockout pin (UVLO), and the undervoltage lockout pin (UVLO) is electrically connected to the first output end of the filtering module (300), for detecting whether the input voltage is lower than a threshold voltage for turning on the second control unit (221);and if the input voltage is lower than the threshold voltage for turning on the second control unit (221),the second control unit (221) is automatically turned off.

7. The vehicle-mounted power supply circuit according to Claim 6,**characterized in that** the second control unit (221) further comprises: a slope setting pin (dvdT) for setting a slope of an output internal voltage; a mode selection pin (MODE) for selecting an overload error response mode; an RTN functional pin (RTN) used as a reference voltage of the internal control circuit; wherein the mode selection pin (MODE) is electrically connected to the RTN functional pin (RTN).

8. The vehicle-mounted power supply circuit according to Claim 7,**characterized in that** the voltage clamp control sub-circuit (220) further comprises a second capacitor (CdvdT);and one end of the second capacitor (CdvdT) is electrically connected to the slope setting pin (dvdT), and the other end of the second capacitor (CdvdT) is electrically connected to the mode selection pin (MODE) and the RTN functional pin (RTN).

9. The vehicle-mounted power supply circuit according to Claim 8,**characterized in that** the second control unit (221) further comprises a fault condition detection pin (FLT) for external equipment to detect whether the second control unit (221) breaks down; and the fault condition detection pin (FLT) is connected to the output pin (OUT) of the second control unit (221) through a resistor (RFLT).

10. The vehicle-mounted power supply circuit according to Claim 8,**characterized in that** the second control unit (221) further comprises a turn-off pin (SHDN), which is configured to be pulled down via the trigger of the low current, so that equipment enters a low-power-consumption shutdown mode.

11. The vehicle-mounted power supply circuit according to Claim 8,**characterized in that** the second control unit (221) further comprises a current monitoring output pin (IMON);the current monitoring output pin (IMON) is electrically connected to the RTN functional pin (RTN) via a resistor (RIMON);and the current monitoring output pin (IMON) is further connected to an external load monitor.

12. The vehicle-mounted power supply circuit according to Claim 11, **characterized in that** the second control unit (221) further comprises a limit current setting pin (ILIM);and the limit current setting pin (ILIM) is electrically connected to the RTN functional pin (RTN) via a resistor (RILIM).

13. The vehicle-mounted power supply circuit according to Claim 12,**characterized in that** the feedback unit (230) comprises a third resistor (R3), a fourth resistor (R4) and an overvoltage protection device (OVP),the third resistor (R3) and the fourth resistor (R4) are connected in series and then electrically connected between the output pin (OUT) of the second control unit (221) and the RTN functional pin (RTN), one end of the overvoltage protection device (OVP) is electrically connected to an intermediate node formed after the third resistor (R3) and the fourth resistor (R4) are connected in series, and the other end of the overvoltage protection device (OVP) is electrically connected to an overvoltage protection signal pin (OVP) of the second control unit (221), for performing voltage reduction protection on the second control unit (221) when the direct current voltage is too high.

14. The vehicle-mounted power supply circuit according to Claim 12,**characterized in that** the voltage clamp control sub-circuit (220) further comprises a third capacitor (CIN);and one end of the third capacitor (CIN) is electrically connected to the first output end of the filtering module (300) and the switch assembly, and the other end of the third capacitor (CIN) is grounded.

15. The vehicle-mounted power supply circuit according to Claim 12,**characterized in that** the feedback unit (230) further comprises a fourth capacitor (COUT);and one end of the fourth capacitor (COUT) is electrically connected to the output pin of the voltage clamp control sub-circuit (220), and the other end of the fourth capacitor (COUT) is grounded.

16. A vehicle, **characterized in that** the vehicle comprises a vehicle-mounted power supply circuit according to any one of Claims 1 to 15.

## Patentansprüche

1. Fahrzeugmontierte Stromversorgungsschaltung, wobei die fahrzeugmontierte Stromversorgungsschaltung ein Leistungsschaltmodul (100) und ein Spannungsbegrenzungsmodul (200) umfasst, wobei das Leistungsschaltmodul (100) und das Spannungsbegrenzungsmodul (200) beide elektrisch mit einer Stromversorgung verbunden sind, um eine Eingangsspannung von der Stromversorgung zu empfangen; basierend auf der empfangenen Eingangsspannung ist das Leistungsschaltmodul (100) so konfiguriert, dass es eine erste Stromversorgung an eine erste Stromversorgung ausgibt; und das Spannungsklemmmodul (200) ist so konfiguriert, dass es die empfangene Eingangsspannung innerhalb eines voreingestellten Spannungsbereichs klemmt und eine zweite Stromversorgung an eine zweite Stromversorgung ausgibt, wobei das Leistungsschaltmodul (100) elektrisch mit einer Mikrosteuereinheit (MCU) verbunden ist, um ein Schaltsteuersignal von der Mikrosteuereinheit (MCU) zu empfangen, und so konfiguriert ist, dass es das Anschalten oder Abschalten der ersten Stromversorgung basierend auf dem Schaltsteuersignal steuert, **dadurch gekennzeichnet, dass** das Leistungsschaltmodul (100) eine erste Steuereinheit (101), eine erste Leistungsschalt-Halbleitervorrichtung (Q1) und eine zweite Leistungsschalt-Halbleitervorrichtung (Q2) umfasst; die erste Steuereinheit (101) einen Ausgangsanschluss (OUT) und zwei Steuerspannungssignalanschlüsse (DGATE, HGATE) umfasst;eine Source-Elektrode der ersten Leistungsschaltröhre (Q1) elektrisch mit dem ersten Ausgangsende des Filtermoduls (300) verbunden ist; eine Drain-Elektrode der ersten Leistungsschaltröhre (Q1) ist elektrisch mit einer Drain-Elektrode der zweiten Leistungsschaltröhre (Q2) verbunden; eine Source-Elektrode der zweiten Leistungsschaltröhre (Q2) ist elektrisch mit dem Ausgangsanschluss (OUT) der ersten Steuereinheit (101) verbunden, um die erste Stromversorgung auszugeben; eine Gate-Elektrode der ersten Leistungsschaltröhre (Q1) und eine Gate-Elektrode der zweiten Leistungsschaltröhre (Q2) sind jeweils elektrisch mit zwei entsprechenden Steuerspannungssignalanschlüssen (DGATE, HGATE) der ersten Steuereinheit (101) verbunden, um ein Steuersignal von der ersten Steuereinheit (101) zu empfangen; und die erste Steuereinheit (101) umfasst weiter einen Freigabesignal-Pin (EN), und der Freigabesignal-Pin (EN) ist elektrisch mit der Mikrosteuereinheit (MCU) verbunden, um das Signal der Schaltsteuerung von der Mikrosteuereinheit (MCU) zu empfangen, wobei die Schaltsteuerung so konfiguriert ist, dass sie das Ein- oder Abschalten der ersten Stromversorgung steuert, wobei die erste Leistungsschaltröhre (Q1) eine ideale Diode ist und die zweite Leistungsschaltröhre (Q2) ein MOSFET-Bauelement mit integrierter Diode ist, wobei, wenn die Eingangsspannung größer als ein erster Schwellenwert ist, das Leistungsschaltmodul (100) so konfiguriert ist, dass es gesteuert wird, um die erste Stromversorgung abzuschalten, wenn die erste Steuereinheit (101) eine Schaltsteuerung von der Mikrosteuereinheit (MCU) empfängt, die das Abschalten der ersten Stromversorgung anzeigt, wobei das Leistungsschaltmodul (100) weiter einen ersten Kondensator (C1) umfasst und der erste Kondensator (C1) ein erstes Ende und ein zweites Ende aufweist; die erste Steuereinheit (101) umfasst weiter einen vierten Funktionspin (C), einen fünften Funktionspin (VS) und einen sechsten Funktionspin (CAP); und das erste Ende des ersten Kondensators (C1) ist elektrisch mit einem Zwischenknoten der ersten Leistungsschaltröhre (Q1) und der zweiten Leistungsschaltröhre (Q2), dem vierten Funktionspin (C) und dem fünften Funktionspin (VS); und das zweite Ende des ersten Kondensators (C1) ist elektrisch mit dem sechsten Funktionspin (CAP) der ersten Steuereinheit (101) verbunden, um eine Ladungspumpenschaltung zu bilden, die jeweils eine Spannung am Steuerende der ersten Leistungsschaltröhre (Q1) und eine Spannung am Steuerende der zweiten Leistungsschaltröhre (Q2) erhöht,wobei das Spannungsklemmmodul (200) eine TVS (210), eine Spannungsklemmen-Steuerschaltung (220) und eine Rückkopplungseinheit (230) umfasst;die TVS (210) elektrisch zwischen dem ersten Ausgangsende des Filtermoduls (300) und Masse verbunden ist; die Spannungsklemmen-Steuerschaltung (220) elektrisch mit dem ersten Ausgangsende des Filtermoduls (300) bzw. der Rückkopplungseinheit (230) verbunden ist, um eine Größe der Eingangsspannung zu erkennen und die empfangene Eingangsspannung innerhalb eines voreingestellten Spannungsbereichs zu klemmen, um die zweite Stromversorgung an die zweite Stromversorgung auszugeben; und die Rückkopplungseinheit (230) verwendet wird, um die Größe der zweiten Stromversorgung an die Spannungsklemmen-Steuerschaltung (220) zurückzukoppeln.

2. Fahrzeugmontierte Stromversorgungsschaltung nach Anspruch 1, **dadurch gekennzeichnet, dass** die erste Stromversorgungsverknüpfung eine Verknüpfung zur Versorgung eines fahrzeugmontierten Energiemotors mit Energie ist und die zweite Stromversorgungsverknüpfung eine Verknüpfung zur Versorgung einer fahrzeugmontierten Logikschaltung mit Energie ist.

3. Fahrzeugmontierte Stromversorgungsschaltung nach Anspruch 2, **dadurch gekennzeichnet, dass** die fahrzeugmontierte Stromversorgungsschaltung ferner ein Filtermodul (300) umfasst und das Filtermodul (300) konfiguriert ist, um eine Originalspannung von der Stromversorgung zu empfangen und die Originalspannung zu filtern, um die Eingangsspannung auszugeben, wobei das Filtermodul (300) ein erstes Ausgangsende und ein zweites Ausgangsende umfasst, das erste Ausgangsende konfiguriert ist, um die Eingangsspannung auszugeben und das zweite Ausgangsende masseführend ist.

4. Fahrzeugmontierte Stromversorgungsschaltung nach Anspruch 1, **dadurch gekennzeichnet, dass** das Leistungsschaltermodul (100) weiter einen ersten Widerstand (R1) und einen zweiten Widerstand (R2) umfasst, und die erste Steuereinheit (101) weiter einen ersten Funktionspin (A), einen zweiten Funktionspin (VSNS), einen dritten Funktionspin (SW) und einen Überspannungserkennungs-Pin (OV) umfasst, und der erste und der zweite Funktionspin (A, VSNS) beide elektrisch mit der Source-Elektrode der ersten Leistungsschaltröhre (Q1) verbunden sind; der erste Widerstand (R1) und der zweite Widerstand (R2) in Reihe geschaltet und anschließend elektrisch zwischen dem dritten Funktionspin (SW) und Masse verbunden sind, der dritte Funktionspin (SW) intern elektrisch mit dem zweiten Funktionspin (VSNS) verbunden ist, und der Überspannungserkennungs-Pin (OV) ist elektrisch mit einem Zwischenknoten verbunden, der nach der Reihenschaltung des ersten Widerstands (R1) und des zweiten Widerstands (R2) gebildet wird, um zu erkennen, ob die Eingangsspannung größer als ein zweiter Schwellenwert ist; wobei, wenn die Eingangsspannung größer als der zweite Schwellenwert ist, die erste Steuereinheit (101) so konfiguriert ist, dass sie das Leistungsschaltermodul (100) so zu steuern, dass die erste Stromversorgung abgeschaltet wird, wenn die erste Steuereinheit (101) keine Schaltsteuerung von der Mikrosteuereinheit (MCU) empfängt, die das Abschalten der ersten Stromversorgung anzeigt, wobei der zweite Schwellenwert größer ist als der erste Schwellenwert.

5. Fahrzeugmontierte Stromversorgungsschaltung nach Anspruch 1, **dadurch gekennzeichnet, dass** die Spannungsklemmen-Steuerschaltung (220) eine zweite Steuereinheit (221) umfasst, wobei die zweite Steuereinheit (221) eine Schaltanordnung umfasst; die Schaltanordnung umfasst eine dritte Leistungsschaltröhre (Q3) und eine vierte Leistungsschaltröhre (Q4), und die dritte Leistungsschaltröhre (Q3) elektrisch mit der vierten Leistungsschaltröhre (Q4) verbunden ist, um die empfangene Eingangsspannung innerhalb des voreingestellten Spannungsbereichs zu begrenzen und zur Vorbeugung eines Verpolungsanschlusses der Gleichspannung, wobei eine Source-Elektrode der dritten Leistungsschaltröhre (Q3) elektrisch mit dem ersten Ausgangsende der Filtereinheit (300) verbunden ist; eine Drain-Elektrode der dritten Leistungsschaltröhre (Q3) elektrisch mit einer Drain-Elektrode der vierten Leistungsschaltröhre (Q4) verbunden ist; und eine Source-Elektrode der vierten Leistungsschaltröhre (Q4) elektrisch mit einem Ausgangsstift (OUT) der zweiten Steuereinheit (221) verbunden ist, um die zweite Stromversorgung an die zweite Stromversorgung auszugeben.

6. Fahrzeugmontierte Stromversorgungsschaltung nach Anspruch 5, **dadurch gekennzeichnet, dass** die zweite Steuereinheit (221) weiter einen Unterspannungsabschaltpin (UVLO) umfasst und der Unterspannungsabschaltpin (UVLO) elektrisch mit dem ersten Ausgangsanschluss des Filtermoduls (300) verbunden ist, um zu erkennen, ob die Eingangsspannung niedriger ist als eine Schwellenspannung zum Anschalten der zweiten Steuereinheit (221); und falls die Eingangsspannung niedriger ist als die Schwellenspannung zum Anschalten der zweiten Steuereinheit (221), wird die zweite Steuereinheit (221) automatisch abgeschaltet.

7. Fahrzeugmontierte Stromversorgungsschaltung nach Anspruch 6, **dadurch gekennzeichnet, dass** die zweite Steuereinheit (221) weiter umfasst: einen Steigungseinstell-Pin (dvdT) zum Festlegen einer Steigung einer internen Ausgangsspannung; einen Modusauswahl-Pin (MODE) zum Auswählen eines Überlastfehler-Reaktionsmodus; einen RTN-Funktionspin (RTN), der als Referenzspannung der internen Steuerschaltung verwendet wird; wobei der Modusauswahl-Pin (MODE) elektrisch mit dem RTN-Funktionspin (RTN) verbunden ist.

8. Fahrzeugmontierte Stromversorgungsschaltung nach Anspruch 7, **dadurch gekennzeichnet, dass** die Spannungsklemmen-Steuerschaltung (220) weiter einen zweiten Kondensator (CdvdT) umfasst; und wobei ein Ende des zweiten Kondensators (CdvdT) elektrisch mit dem Pin zum Festlegen der Steigung (dvdT) verbunden ist und das andere Ende des zweiten Kondensators (CdvdT) elektrisch mit dem Pin zur Modusauswahl (MODE) und dem RTN-Funktions-Pin (RTN) verbunden ist.

9. Fahrzeugmontierte Stromversorgungsschaltung nach Anspruch 8, **dadurch gekennzeichnet, dass** die zweite Steuereinheit (221) weiter einen Fehlerzustandserkennungs-Pin (FLT) umfasst, über den externe Geräte erkennen können, ob die zweite Steuereinheit (221) ausfällt; und dass der Fehlerzustandserkennungs-Pin (FLT) über einen Widerstand (RFLT) mit dem Ausgangsanschluss (OUT) der zweiten Steuereinheit (221) verbunden ist.

10. Fahrzeugmontierte Stromversorgungsschaltung nach Anspruch 8, **dadurch gekennzeichnet, dass** die zweite Steuereinheit (221) weiter einen Abschaltanschluss (SHDN) umfasst, der so konfiguriert ist, dass er über den Auslöser des niedrigen Stroms auf Low-Pegel gezogen wird, sodass die Geräte in einen Abschaltmodus mit geringem Energieverbrauch wechseln.

11. Fahrzeugmontierte Stromversorgungsschaltung nach Anspruch 8, **dadurch gekennzeichnet, dass** die zweite Steuereinheit (221) weiter einen Stromüberwachungs-Ausgangspin (IMON) umfasst;der Stromüberwachungs-Ausgangspin (IMON) über einen Widerstand (RIMON) elektrisch mit dem RTN-Funktionspin (RTN) verbunden ist;und der Stromüberwachungs-Ausgangspin (IMON) weiter mit einem externen Lastwächter verbunden ist.

12. Fahrzeugmontierte Stromversorgungsschaltung nach Anspruch 11, **dadurch gekennzeichnet, dass** die zweite Steuereinheit (221) weiter einen Pin zur Einstellung des Grenzstroms (ILIM) umfasst;und der Pin zur Einstellung des Grenzstroms (ILIM) über einen Widerstand (RILIM) elektrisch mit dem RTN-Funktionspin (RTN) verbunden ist.

13. Fahrzeugmontierte Stromversorgungsschaltung nach Anspruch 12, **dadurch gekennzeichnet, dass** die Rückkopplungseinheit (230) einen dritten Widerstand (R3), einen vierten Widerstand (R4) und eine Überspannungsschutzvorrichtung (OVP) umfasst, der dritte Widerstand (R3) und der vierte Widerstand (R4) in Reihe geschaltet und anschließend elektrisch zwischen dem Ausgangspin (OUT) der zweiten Steuereinheit (221) und dem RTN-Funktionspin (RTN) verbunden sind, ein Ende der Überspannungsschutzvorrichtung (OVP) elektrisch mit einem Zwischenknoten verbunden ist, der hinter dem dritten Widerstand gebildet wird (R3) und dem vierten Widerstand (R4) gebildet wird, und das andere Ende der Überspannungsschutzvorrichtung (OVP) elektrisch mit einem Überspannungsschutz-Signalpin (OVP) der zweiten Steuereinheit (221) verbunden ist, um einen Spannungsreduzierungsschutz an der zweiten Steuereinheit (221) durchzuführen, wenn die Gleichspannung zu hoch ist.

14. Fahrzeugmontierte Stromversorgungsschaltung nach Anspruch 12, **dadurch gekennzeichnet, dass** die Spannungsklemmen-Steuerschaltung (220) weiter einen dritten Kondensator (CIN) umfasst; und ein Ende des dritten Kondensators (CIN) elektrisch mit dem ersten Ausgangsende des Filtermoduls (300) und der Schalterbaugruppe verbunden ist, und das andere Ende des dritten Kondensators (CIN) an die Masse angeschlossen ist.

15. Fahrzeugmontierte Stromversorgungsschaltung nach Anspruch 12, **dadurch gekennzeichnet, dass** die Rückkopplungseinheit (230) weiter einen vierten Kondensator (COUT) umfasst; und ein Ende des vierten Kondensators (COUT) elektrisch mit dem Ausgangspin der Spannungsklemm-Steuerschaltung (220) verbunden ist, und das andere Ende des vierten Kondensators (COUT) auf Masse geerdet ist.

16. Fahrzeug, **dadurch gekennzeichnet, dass** das Fahrzeug eine fahrzeugmontierte Stromversorgungsschaltung nach einem der Ansprüche 1 bis 15 umfasst.

## Revendications

1. Circuit d'alimentation électrique monté sur véhicule, le circuit d'alimentation électrique monté sur véhicule comprenant un module de commutation de puissance (100) et un module de limitation de tension (200), le module de commutation de puissance (100) et le module de limitation de tension (200) étant tous deux connectés électriquement à une alimentation électrique pour recevoir une tension d'entrée de l'alimentation électrique ; en fonction de la tension d'entrée reçue, le module de commutation de puissance (100) est configuré pour délivrer une première tension d'alimentation électrique à une première liaison d'alimentation électrique ; et le module de limitation de tension (200) est configuré pour limiter la tension d'entrée reçue au sein d'une plage de tension prédéfinie et pour délivrer une seconde tension d'alimentation électrique à une seconde liaison d'alimentation électrique, dans lequel le module de commutation de puissance (100) est connecté électriquement à une unité de microcontrôleur (MCU) afin de recevoir un signal de commande de commutation de l'unité de microcontrôleur (MCU) et configuré pour commander la mise sous tension ou la mise hors tension de la première tension d'alimentation électrique en fonction du signal de commande de commutation, **caractérisé en ce que** le module de commutation de puissance (100) comprend une première unité de commande (101), un premier tube de commutation de puissance (Q1) et un deuxième tube de commutation de puissance (Q2), la première unité de commande (101) comprend une broche de sortie (OUT) et deux broches de signal de tension de commande (DGATE, HGATE) ; une électrode de source du premier tube de commutation de puissance (Q1) est connectée électriquement à la première sortie du module de filtrage (300) ; une électrode de drain du premier tube de commutation de puissance (Q1) est connectée électriquement à l'électrode de drain du deuxième tube de commutation de puissance (Q2) ; une électrode de source du deuxième tube de commutation de puissance (Q2) est connectée électriquement à la broche de sortie (OUT) de la première unité de commande (101) afin de délivrer la première tension d'alimentation électrique ; une électrode de grille du premier tube de commutation de puissance (Q1) et une électrode de grille du deuxième tube de commutation de puissance (Q2) sont connectées électriquement à deux broches de signal de tension de commande (DGATE, HGATE) correspondantes de la première unité de commande (101), respectivement, afin de recevoir un signal de commande de la première unité de commande (101) ; et la première unité de commande (101) comprend en outre une broche de signal d'activation (EN) et la broche de signal d'activation (EN) est connectée électriquement à l'unité de microcontrôleur (MCU) pour recevoir le signal de commande de commutation de l'unité de microcontrôleur (MCU), dans lequel le signal de commande de commutation est configuré pour commander la mise sous tension ou la mise hors tension de la première tension d'alimentation électrique, dans lequel le premier tube de commutation de puissance (Q1) est une diode idéale et le deuxième tube de commutation de puissance (Q2) est un dispositif MOSFET intégrant une diode, dans lequel lorsque la tension d'entrée est supérieure à un premier seuil, le module de commutation de puissance (100) est configuré pour être commandé pour mettre hors tension la première tension d'alimentation électrique si la première unité de commande (101) reçoit un signal de commande de commutation de l'unité de microcontrôleur (MCU) indiquant la mise hors tension de la première tension d'alimentation électrique, dans lequel le module de commutation de puissance (100) comprend en outre un premier condensateur (C1), et le premier condensateur (C1) comprend une première extrémité et une seconde extrémité ; la première unité de commande (101) comprend en outre une quatrième broche fonctionnelle (C), une cinquième broche fonctionnelle (VS) et une sixième broche fonctionnelle (CAP) ; et la première extrémité du premier condensateur (C1) est électriquement connectée à un nœud intermédiaire du premier tube de commutation de puissance (Q1) et du deuxième tube de commutation de puissance (Q2), la quatrième broche fonctionnelle (C) et la cinquième broche fonctionnelle (VS) ; et la seconde extrémité du premier condensateur (C1) est électriquement connectée à la sixième broche fonctionnelle (CAP) de la première unité de commande (101), pour la formation d'un circuit de pompe de charge pour augmenter respectivement une tension de l'extrémité de commande du premier tube de commutation de puissance (Q1) et une tension de l'extrémité de commande du deuxième tube de commutation de puissance (Q2), dans lequel le module de limitation de tension (200) comprend un TVS (210), un sous-circuit de commande de limitation de tension (220) et une unité de rétroaction (230) ; le TVS (210) est électriquement connecté entre la première extrémité de sortie du module de filtrage (300) et mis à la terre ; le sous-circuit de commande de limitation de tension (220) est électriquement connecté à la première extrémité de sortie du module de filtrage (300) et l'unité de rétroaction (230), respectivement, pour la détection d'une amplitude de la tension d'entrée et la limitation de la tension d'entrée reçue a sein d'une plage de tension prédéfinie, de manière à délivrer la seconde tension d'alimentation électrique à la seconde liaison d'alimentation électrique ; et l'unité de rétroaction (230) est utilisée pour fournir en retour l'amplitude de la seconde tension d'alimentation électrique au sous-circuit de commande de limitation de tension (220).

2. Circuit d'alimentation électrique monté sur véhicule selon la revendication 1, **caractérisé en ce que** la première liaison d'alimentation électrique est une liaison destinée à alimenter un moteur électrique monté sur véhicule, et la seconde liaison d'alimentation électrique est une liaison destinée à alimenter un circuit logique monté sur véhicule.

3. Circuit d'alimentation électrique monté sur véhicule selon la revendication 2, **caractérisé en ce que** le circuit d'alimentation électrique monté sur véhicule comprend en outre un module de filtrage (300), et le module de filtrage (300) est configuré pour recevoir une tension d'origine de l'alimentation électrique et pour filtrer la tension d'origine pour délivrer la tension d'entrée, le module de filtrage (300) comprenant une première extrémité de sortie et une seconde extrémité de sortie, la première extrémité de sortie étant configurée pour délivrer la tension d'entrée et la seconde extrémité de sortie étant mise à la terre.

4. Circuit d'alimentation électrique monté sur véhicule selon la revendication 1, **caractérisé en ce que** le module de commutation de puissance (100) comprend en outre une première résistance (R1) et une deuxième résistance (R2), et la première unité de commande (101) comprend en outre une première broche fonctionnelle (A), une deuxième broche fonctionnelle (VSNS), une troisième broche fonctionnelle (SW) et une broche de détection de surtension (OV), et les première et deuxième broches fonctionnelles (A, VSNS) sont toutes deux connectées électriquement à l'électrode de source du premier tube de commutation de puissance (Q1) ; la première résistance (R1) et la deuxième résistance (R2) sont connectées en série, puis connectées électriquement entre la troisième broche fonctionnelle (SW) et la terre, la troisième broche fonctionnelle (SW) est connectée électriquement en interne à la deuxième broche fonctionnelle (VSNS), et la broche de détection de surtension (OV) est connectée électriquement à un nœud intermédiaire formé après la connexion en série de la première résistance (R1) et de la deuxième résistance (R2), afin de détecter si la tension d'entrée est supérieure à un deuxième seuil ; dans lequel, lorsque la tension d'entrée est supérieure au deuxième seuil, la première unité de commande (101) est configurée pour commander le module de commutation de puissance (100) afin de mettre hors tension la première tension d'alimentation électrique si la première unité de commande (101) ne reçoit pas de signal de commande de commutation de l'unité de microcontrôleur (MCU) indiquant la mise hors tension de la première tension d'alimentation électrique, dans lequel le deuxième seuil est supérieur au premier seuil.

5. Circuit d'alimentation électrique monté sur véhicule selon la revendication 1, **caractérisé en ce que** le sous-circuit de commande de limitation de tension (220) comprend une seconde unité de commande (221), la seconde unité de commande (221) comprend un ensemble de commutation ; l'ensemble de commutation comprend un troisième tube de commutation de puissance (Q3) et un quatrième tube de commutation de puissance (Q4), et le troisième tube de commutation de puissance (Q3) est connecté électriquement au quatrième tube de commutation de puissance (Q4), afin de limiter la tension d'entrée reçue au sein de la plage de tension prédéfinie et utilisé pour empêcher une connexion inverse de la tension à courant continu, dans lequel une électrode de source du troisième tube de commutation de puissance (Q3) est connectée électriquement à la première extrémité de sortie de l'unité de filtrage (300) ; une électrode de drain du troisième tube de commutation de puissance (Q3) est connectée électriquement à une électrode de drain du quatrième tube de commutation de puissance (Q4) ; et une électrode de source du quatrième tube de commutation de puissance (Q4) est connectée électriquement à une broche de sortie (OUT) de la seconde unité de commande (221), de manière à délivrer la seconde tension d'alimentation électrique à la seconde liaison d'alimentation électrique.

6. Circuit d'alimentation électrique monté sur véhicule selon la revendication 5, **caractérisé en ce que** la seconde unité de commande (221) comprend en outre une broche de verrouillage de sous-tension (UVLO), et la broche de verrouillage de sous-tension (UVLO) est connectée électriquement à la première extrémité de sortie du module de filtrage (300), pour détecter si la tension d'entrée est inférieure à une tension de seuil pour mettre sous tension la seconde unité de commande (221) ; et si la tension d'entrée est inférieure à la tension de seuil pour mettre sous tension la seconde unité de commande (221), la seconde unité de commande (221) est automatiquement mise hors tension.

7. Circuit d'alimentation électrique monté sur véhicule selon la revendication 6, **caractérisé en ce que** la seconde unité de commande (221) comprend en outre : une broche de définition de pente (dvdT) pour définir une pente d'une tension interne de sortie ; une broche de sélection de mode (MODE) pour sélectionner un mode de réponse aux erreurs de surcharge ; une broche fonctionnelle RTN (RTN) utilisée comme une tension de référence du circuit de commande interne ; la broche de sélection de mode (MODE) étant connectée électriquement à la broche fonctionnelle RTN (RTN).

8. Circuit d'alimentation électrique monté sur véhicule selon la revendication 7, **caractérisé en ce que** le sous-circuit de commande de limitation de tension (220) comprend en outre un deuxième condensateur (CdvdT) ; et une extrémité du deuxième condensateur (CdvdT) est connectée électriquement à la broche de définition de pente (dvdT), et l'autre extrémité du deuxième condensateur (CdvdT) est connectée électriquement à la broche de sélection de mode (MODE) et à la broche fonctionnelle RTN (RTN).

9. Circuit d'alimentation électrique monté sur véhicule selon la revendication 8, **caractérisé en ce que** la seconde unité de commande (221) comprend en outre une broche de détection de défaut (FLT) permettant à un équipement externe de détecter si la seconde unité de commande (221) tombe en panne ; et la broche de détection de défaut (FLT) est connectée à la broche de sortie (OUT) de la seconde unité de commande (221) par l'intermédiaire d'une résistance (RFLT).

10. Circuit d'alimentation électrique monté sur véhicule selon la revendication 8, **caractérisé en ce que** la seconde unité de commande (221) comprend en outre une broche de mise hors tension (SHDN), qui est configurée pour être tirée vers le bas par l'intermédiaire du déclencheur du faible courant, de sorte que l'équipement entre dans un mode d'arrêt à faible consommation d'énergie.

11. Circuit d'alimentation électrique monté sur véhicule selon la revendication 8, **caractérisé en ce que** la seconde unité de commande (221) comprend en outre une broche de sortie de surveillance de courant (IMON) ; la broche de sortie de surveillance de courant (IMON) est connectée électriquement à la broche fonctionnelle RTN (RTN) par l'intermédiaire d'une résistance (RIMON) ; et la broche de sortie de surveillance de courant (IMON) est en outre connectée à un dispositif de surveillance de charge externe.

12. Circuit d'alimentation électrique monté sur véhicule selon la revendication 11, **caractérisé en ce que** la seconde unité de commande (221) comprend en outre une broche de définition de courant limite (ILIM) ; et la broche de définition de courant limite (ILIM) est connectée électriquement à la broche fonctionnelle RTN (RTN) par l'intermédiaire d'une résistance (RILIM).

13. Circuit d'alimentation électrique monté sur véhicule selon la revendication 12, **caractérisé en ce que** l'unité de rétroaction (230) comprend une troisième résistance (R3), une quatrième résistance (R4) et un dispositif de protection contre les surtensions (OVP), la troisième résistance (R3) et la quatrième résistance (R4) sont connectées en série puis connectées électriquement entre la broche de sortie (OUT) de la seconde unité de commande (221) et la broche fonctionnelle RTN (RTN), une extrémité du dispositif de protection contre les surtensions (OVP) est connectée électriquement à un nœud intermédiaire formé après que la troisième résistance (R3) et la quatrième résistance (R4) sont connectées en série, et l'autre extrémité du dispositif de protection contre les surtensions (OVP) est connectée électriquement à une broche de signal de protection contre les surtensions (OVP) de la seconde unité de commande (221), pour effectuer une protection contre la réduction de tension sur la seconde unité de commande (221) lorsque la tension à courant continu est trop élevée.

14. Circuit d'alimentation électrique monté sur véhicule selon la revendication 12, **caractérisé en ce que** le sous-circuit de commande de limitation de tension (220) comprend en outre un troisième condensateur (CIN) ; et une extrémité du troisième condensateur (CIN) est connectée électriquement à la première extrémité de sortie du module de filtrage (300) et à l'ensemble de commutation, et l'autre extrémité du troisième condensateur (CIN) est mise à la terre.

15. Circuit d'alimentation électrique monté sur véhicule selon la revendication 12, **caractérisé en ce que** l'unité de rétroaction (230) comprend en outre un quatrième condensateur (COUT) ; et une extrémité du quatrième condensateur (COUT) est connectée électriquement à la broche de sortie du sous-circuit de commande de limitation de tension (220), et l'autre extrémité du quatrième condensateur (COUT) est mise à la terre.

16. Véhicule, **caractérisé en ce que** le véhicule comprend un circuit d'alimentation électrique monté sur véhicule selon l'une quelconque des revendications 1 à 15.
